# EUROPEAN PATENT SPECIFICATION

(11) **EP 4 293 463 B1**
(45) Date of publication and mention of the grant of the patent: **18.12.2024**
(21) Application number: 23176665.0
(22) Date of filing: 01.06.2023
(51) Int. Cl.: G05D 1/00, A01B 69/00, A01B 69/04

(54) **AUTONOMOUS TRAVEL METHOD, AUTONOMOUS TRAVEL SYSTEM, AND AUTONOMOUS TRAVEL PROGRAM**
AUTONOMES FAHRVERFAHREN, AUTONOMES FAHRSYSTEM UND AUTONOMES FAHRPROGRAMM
PROCÉDÉ DE DÉPLACEMENT AUTONOME, SYSTÈME DE DÉPLACEMENT AUTONOME ET PROGRAMME DE DÉPLACEMENT AUTONOME

(30) Priority: 15.06.2022 JP 2022096279
(43) Date of publication of application: 20.12.2023
(73) Proprietor: Yanmar Holdings Co., Ltd., Osaka-shi, Osaka (JP)
(72) Inventor: TANAKA, Taishi, Okayama-shi (JP); YAMAGUCHI, Yuji, Okayama-shi (JP); ISHIKAWA, Kohei, Okayama-shi (JP); MURAYAMA, Masaaki, Okayama-shi (JP)
(74) Representative: Dennemeyer & Associates S.A.

(56) References cited:
- US-A1- 2014 172 225
- US-A1- 2021 311 488
- US-A1- 2022 167 543

## Description

### TECHNICAL FIELD

The present disclosure relates to an autonomous travel system, an autonomous travel method, and an autonomous travel program for causing a work vehicle to perform an autonomous travel.

### BACKGROUND ART

Conventionally, a work vehicle, which travels autonomously in work areas such as fields along a target route preset based on position information of the work vehicle, is known (see e.g., Patent Document 1). For example, the work vehicle autonomously travels along a target route while controlling vehicle speed based on preset vehicle speed at forward traveling, backward traveling, and turning traveling (see, e.g., Patent Document 1). Further, Patent Document 2 discloses a working vehicle including a traveling vehicle connectible to a working device, a position detector, an autonomous traveling controller, and a distance detector, Patent Document 3 discloses speed control in agricultural vehicle guidance systems, using topographical data to control the speed the agricultural vehicle may traverse a wayline, and Patent Document 4 discloses a method for implementing end-of-row (EOR) turns within a field may include receiving a selection of a selected EOR turn path type of a plurality of EOR turn path types associated with executing EOR turns within the field.

### PRIOR ART DOCUMENT

### PATENT DOCUMENT

Patent Document 1: Japanese Patent Laid-open Publication No. 2021-083394
Patent Document 2 :US 2021/311488 A1
Patent Document 3 : US 2014/172225 A1
Patent Document 4 : US 2022/167543 A1

### SUMMARY OF INVENTION

### TECHNICAL PROBLEM

However, in the conventional technology, for example, when a work vehicle performs turning traveling near edges of a field, the work vehicle may stop autonomously traveling when determining that continuing to travel at the current vehicle speed may cause the work vehicle to go out of the field. In this case, there is a problem that it takes time to restart the autonomous travel of the work vehicle, and thus decreasing work efficiency.

An object of the present invention is to provide an autonomous travel system, an autonomous travel method, and an autonomous travel program capable of continuing the autonomous travel while preventing the work vehicle traveling autonomously near the edges of the work area from going out of the field.

### SOLUTION TO PROBLEM

An autonomous travel method according to the present disclosure includes: causing a work vehicle to perform an autonomous travel following a target route including a turning route in a work area; acquiring a distance from a reference point of the turning route to an edge of the work area; and setting a vehicle speed of the work vehicle on a first turning route where the distance from the reference point to the edge of the work area is not more than a predetermined distance to a predetermined speed which is slower than a vehicle speed of the work vehicle on a second turning route where the distance from the reference point to the edge of the work area exceeds the predetermined distance.

An autonomous travel system according to the present disclosure includes a traveling processor, an acquisition processor, and a setting processor. The traveling processor causes a work vehicle to perform an autonomous travel following a target route including a turning route in a work area. The acquisition processor acquires a distance from a reference point of the turning route to an edge of the work area. The setting processor sets a vehicle speed of the work vehicle on a first turning route where the distance from the reference point to the edge of the work area is not more than a predetermined distance to a predetermined speed which is slower than a vehicle speed of the work vehicle on a second turning route where the distance from the reference point to the edge of the work area exceeds the predetermined distance.

An autonomous travel program according to the present disclosure causes one or more processors to execute the procedures including: causing a work vehicle to perform an autonomous travel following a target route including a turning route in a work area; acquiring a distance from a reference point of the turning route to an edge of the work area; and setting a vehicle speed of the work vehicle on a first turning route where the distance from the reference point to the edge of the work area is not more than a predetermined distance to a predetermined speed which is slower than a vehicle speed of the work vehicle on a second turning route where the distance from the reference point to the edge of the work area exceeds the predetermined distance.

### ADVANTAGEOUS EFFECTS OF INVENTION

The present disclosure provides an autonomous travel system, an autonomous travel method, and an autonomous travel program capable of continuing the autonomous travel while preventing the work vehicle traveling autonomously near the edges of the work area from going out of the field.

### BRIEF DESCRIPTION OF DRAWINGS

FIG. 1 is a block diagram illustrating a configuration of an autonomous travel system according to an embodiment of the present disclosure,
FIG. 2 is an external view illustrating a configuration of a combine according to the embodiment of the present disclosure,
FIG. 3 is a diagram showing an example of a conventional traveling method of the combine during discharge operation,
FIG. 4 is a diagram illustrating an example of a setting screen displayed in an operation terminal according to the embodiment of the present disclosure,
FIG. 5 is a diagram illustrating another example of the setting screen displayed in the operation terminal according to the embodiment of the present disclosure,
FIG. 6 is a diagram illustrating another example of the setting screen displayed in the operation terminal according to the embodiment of the present disclosure,
FIG. 7 is a diagram illustrating an example of a traveling method of the combine during discharge operation according to the present disclosure,
FIG. 8 is a flowchart illustrating an example of a procedure of an autonomous travel process executed by the autonomous travel system according to the embodiment of the present disclosure,
FIG. 9 is a diagram illustrating another example of the setting screen displayed in the operation terminal according to the embodiment of the present disclosure,
FIG. 10 is a diagram illustrating another example of the traveling method of the combine during discharge operation according to the present disclosure, and
FIG. 11 is a diagram illustrating another example of the traveling method of the combine during discharge operation according to the present disclosure.

### DESCRIPTION OF EMBODIMENTS

Embodiments described below are specific examples embodying the present disclosure and are not intended to limit the technical scope of the present disclosure.

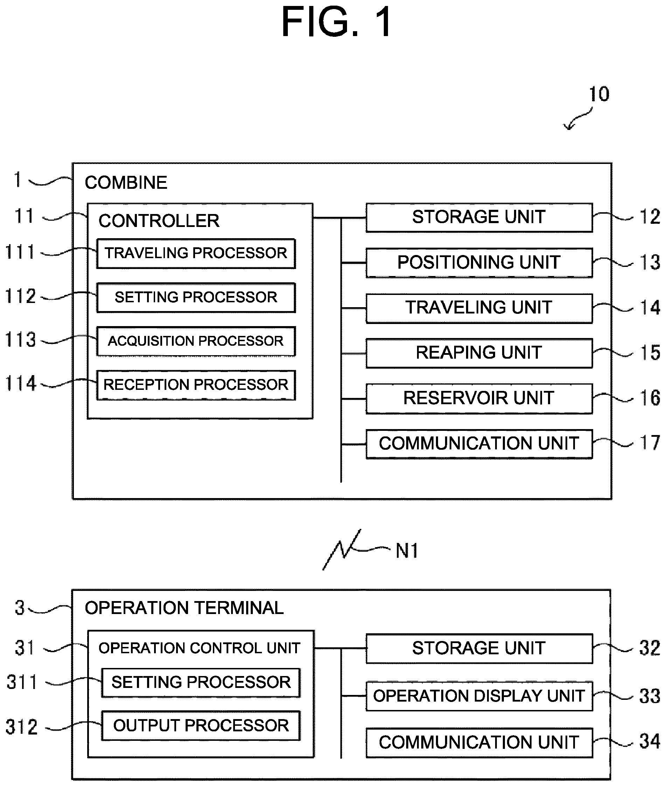

A combine 1 is described below as an example of a work vehicle of the present disclosure. As illustrated in FIG. 1, an autonomous travel system 10 according to the embodiment of the present disclosure includes the combine 1 and an operation terminal 3. The combine 1 and the operation terminal 3 can communicate with each other via a communication network N1. For example, the combine 1 and the operation terminal 3 can communicate via a mobile phone network, a packet network, or a wireless LAN.

The combine 1 is a work vehicle to perform agricultural work such as reaping in a field (an example of a work area). The combine 1 performs the work while traveling in the field. At the same time, the combine 1 sends to the operation terminal 3 GNSS (Global Navigation Satellite System) information of a GNSS antenna mounted on the combine 1, i.e., the combine 1's own vehicle position, as measurement point data.

The combine 1 is configured to be an autonomous travel vehicle that performs the autonomous travel along a preset work route. The combine 1 also receives various types of setting information from the operation terminal 3 to perform the autonomous travel according to the setting information.

The operation terminal 3 is a portable terminal capable of remotely controlling the combine 1, and is composed of a tablet type terminal, a laptop type personal computer, a smart phone, etc., for example. An operation device similar to the operation terminal 3 may be mounted on the combine 1.

A worker (operator) can perform setting operations for various setting items at the operation terminal 3. The operation terminal 3 also displays information such as a work state and traveling state of the combine 1 during autonomous travel. The operator can recognize the work state and traveling state at the operation terminal 3.

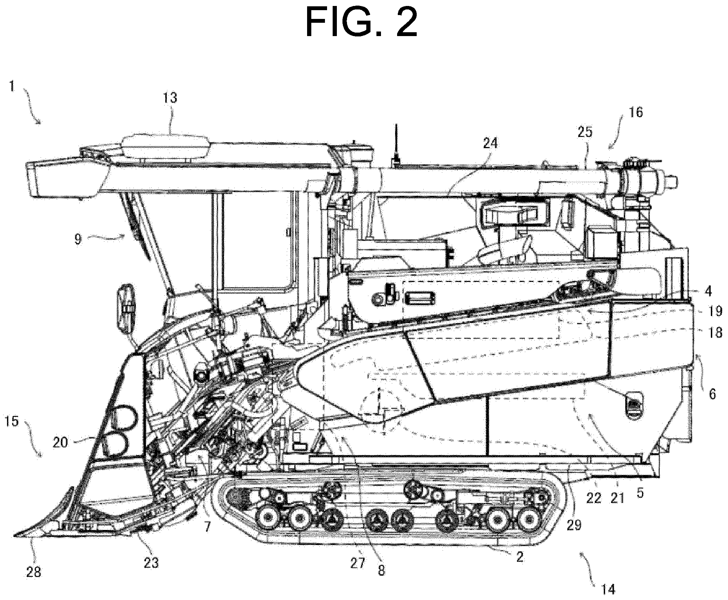

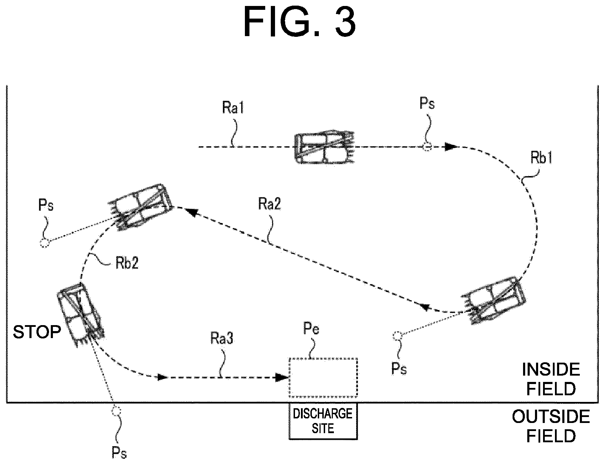

Meanwhile, the combine 1 discharges the grain stored in a reservoir tank 24 (see FIG. 2) at a predetermined discharge position in the field to a discharge site installed outside the field or a carrier vehicle parked at the discharge site. Since the discharge position is generally set at the edge of the field, the combine 1 travels near the edge of the field when performing the discharge operation. Conventionally, when the combine 1 travels near the edge of the field, there was a problem that the autonomous travel stops and thus a work efficiency is decreased. A specific example of the problem is illustrated in FIG. 3. FIG. 3 is a diagram showing an example of a conventional traveling method of the combine 1 during discharge operation.

For example, when the combine 1 reaches a position where the reservoir amount in the reservoir tank 24 reaches a predetermined amount (discharge transition position), the combine 1 suspends the reaping operation and begins the discharge operation. The abovementioned discharge transition position can be specified based on a reapable travel distance that is based on an empty capacity of the reservoir tank 24. As shown in FIG. 3, during the discharge operation, the combine 1 travels up to the discharge position Pe along a straight advancing route Ra1, a turning route Rb1, a straight advancing route Ra2, a turning route Rb2, and a straight advancing route Ra3, which are a discharge route, for example. When the combine 1 reaches the discharge position Pe, it stops at the discharge position Pe and discharges the grain stored in the reservoir tank 24 to the discharge site.

Here, the combine 1 sets a virtual point Ps at a predetermined position in an advancing direction of the combine 1. The virtual point Ps is a marker (reference point for stop determination) that is used to stop the combine 1 in an event where the virtual point Ps goes to the outside of the field, and serves to prevent the combine 1 from going out of the field. For example, the combine 1 decelerates and stops when the virtual point Ps reaches the edge of the field during the autonomous travel.

In FIG. 3, when the combine 1 turns at a preset set speed (turning vehicle speed) on the turning route Rb2 of the discharge route to the discharge position Pe, the combine 1 stops to prevent the virtual point Ps from going out of the field. In this case, since the autonomous travel of the combine 1 stops, the operator must manually drive the combine 1 to correct its position or manually drive the combine 1 up to the discharge position Pe. Consequently, the work efficiency is reduced.

In contrast, the autonomous travel system 10 according to the present embodiment is provided with a configuration that can prevent the combine 1 autonomously traveling near the edge of the field from going out of the field as well as continue the autonomous travel, as described below. In the following, a specific configuration of the combine 1 and the operation terminal 3 to realize the abovementioned configuration is described in detail.

### Operation Terminal 3

As illustrated in FIG. 1, the operation terminal 3 is an information processing device that includes an operation control unit 31, a storage unit 32, an operation display unit 33, a communication unit 34, and the like. The operation terminal 3 consists of a tablet terminal, for example.

The communication unit 34 is a communication interface that connects the operation terminal 3 to the communication network N1 in a wired or wireless manner, and conducts data communication with an external device such as one or more combines 1 via the communication network N1 in accordance with a predetermined communication protocol.

The operation display unit 33 is a user interface that includes a display unit such as a liquid crystal display and an organic EL display that displays various pieces of information, and an operating unit such as a touch panel, a mouse, and a keyboard that accepts operations. The operator operates the operating unit on an operation screen displayed on the display unit, this makes it possible to execute operation to register the various pieces of information. Furthermore, the operator can operate the operating unit to provide an autonomous travel instruction for the combine 1. Furthermore, at a location away from the combine 1, the operator can recognize a travel state of the combine 1, which travels autonomously along the travel route in the field, from a travel trajectory that is displayed on the operation terminal 3.

The storage unit 32 is a non-volatile storage unit such as a hard disk drive (HDD) and a solid state drive (SSD) that store various pieces of information. The storage unit 32 stores a control program for causing the operation control unit 31 to execute a predetermined control process. For example, the control program is non-temporarily recorded in a computer-readable recording medium such as a flash ROM, an EEPROM, a CD or a DVD, read by a predetermined reading device (not shown) provided in the operation terminal 3, and stored in the storage unit 32. The control programs may be downloaded from a server (not illustrated) to the operation terminal 3 via the communication network N1 and be stored in the storage unit 32. The storage unit 32 may also store the work information transmitted from the combine 1.

In addition, a dedicated application for causing the combine 1 to autonomously travel is installed in the storage unit 32. The operation control unit 31 activates the dedicated application to execute a setting process of various types setting information about the combine 1, issue an autonomous travel instruction to the combine 1, or the like.

The operation control unit 31 has control devices such as a CPU, a ROM, and a RAM. The CPU is a processor that executes various types of arithmetic processes. The ROM is a non-volatile storage unit in which a control program such as a BIOS and an OS for causing the CPU to execute the various arithmetic processes are previously stored. The RAM is a volatile or non-volatile storage unit that stores various pieces of information and is used as a temporary storage memory for the various processes executed by the CPU. The operation control unit 31 controls the operation terminal 3 by causing the CPU to execute the various control programs previously stored in the ROM or the storage unit 32.

As illustrated in FIG. 1, the operation control unit 31 includes various processors such as a setting processor 311 and an output processor 312. The operation control unit 31 functions as the various processors by causing the CPU to execute the various processes according to the control programs. Some or all of the processors may be composed of an electronic circuit. The control programs may be programs for causing a plurality of processing units to function as the processors.

The setting processor 311 sets various pieces of setting information for causing the combine 1 to perform the autonomous travel. Specifically, the setting processor 311 sets field information about the field. The examples of the field information include the shape, size, and position information (coordinates and the like) of the farm field's outermost periphery, measurement point data constituting the farm field's outermost periphery, and the shape, size, and position information (coordinates and the like) of a work area in the field for performing the work in the field. The field information includes an address of the field, the registered name and date of the field information, and the registered name and date of the work area in the field. The setting processor 311 accepts registration operation of the field information by the operator to set the field information.

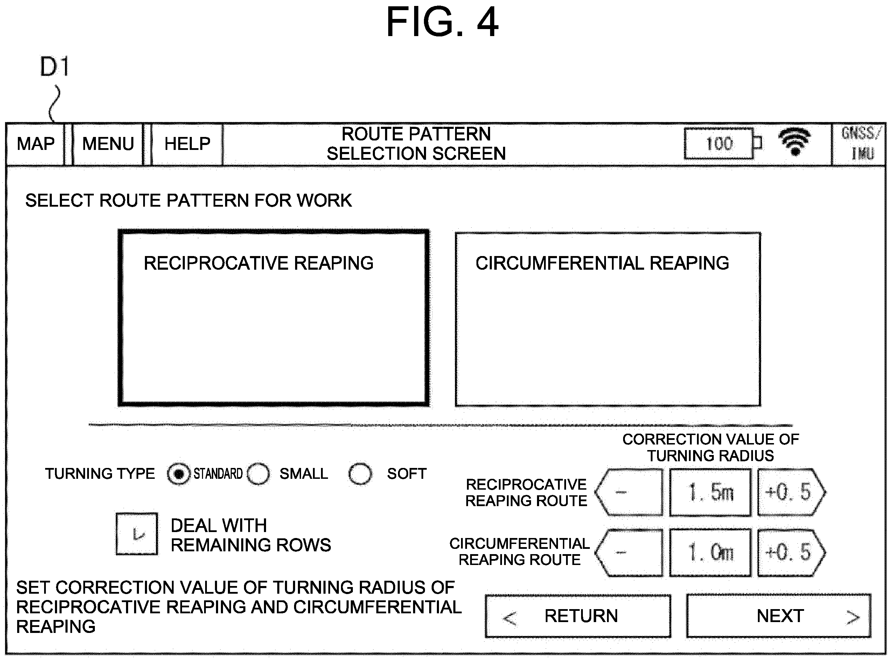

The setting processor 311 also creates a work route (an example of a target route of the present disclosure). For example, the operator selects a route pattern, a turning type, etc. on the setting screen D1 shown in FIG. 4. The route pattern includes "reciprocative reaping" in which multiple rows are reaped backward and forward, and "circumferential reaping" in which a row along an inner circumference of the work area in the field is reaped while shifting the inner circumference to the center. The turning type include a "standard type" in which the minimum turning radius is a radius that the combine 1 can turn under a normal condition, a "small type" in which a turning radius is smaller than that of the standard type, and a "soft type" in which the turning radius is larger than that of the standard type and the minimum turning radius is a radius that the combine 1 can turn safely in an adverse condition (such as a muddy condition). The operator can also correct on the setting screen D1 the turning radius when turning on the work route for the reciprocative reaping or the circumferential reaping.

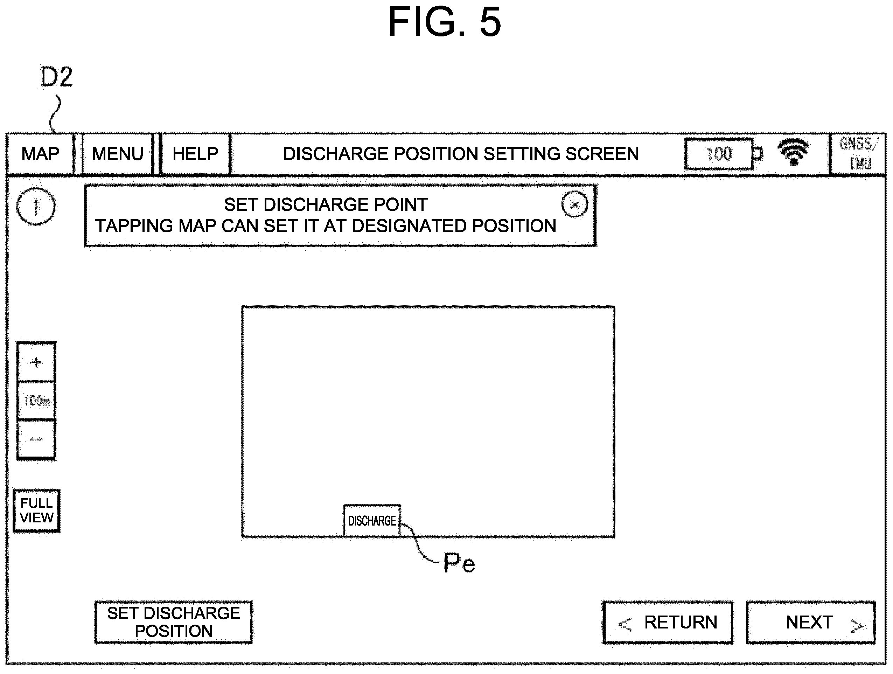

The setting processor 311 also sets the discharge position Pe. For example, the operator can set the discharge position Pe at any position at the edge in the field on the setting screen D2 shown in FIG. 5. The setting processor 311 registers the location information (coordinates) of the discharge position Pe specified by the operator by associating with the field.

The setting processor 311 also creates the work route based on information, such as the field information, the route pattern, the turning type, the turning radius, and the discharge position Pe. The setting processor 311 registers the created work route by associating with the field.

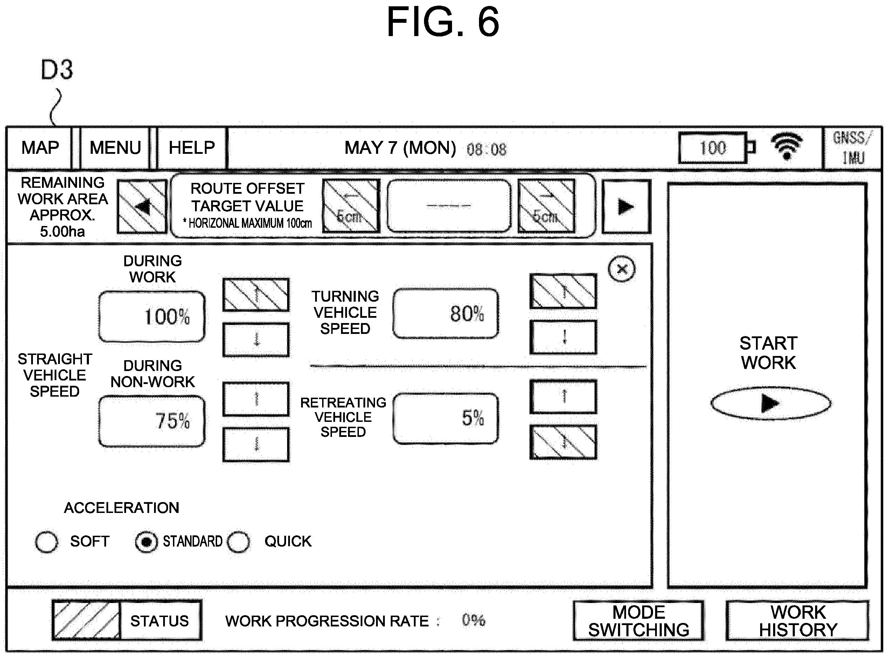

The setting processor 311 also sets a travel speed (vehicle speed) of the combine 1. For example, the operator can set a vehicle speed of the combine 1 on the setting screen D3 shown in FIG. 6. The setting screen D3 includes setting fields for setting a ratio of the vehicle speed during the autonomous travel to a set speed set with a main shift lever of the combine 1, an acceleration phase during the autonomous travel, and the like. The vehicle speed during the autonomous travel includes a straight vehicle speed, a turning vehicle speed, and a retreating vehicle speed during working or non-working condition. The operator can set the ratio of the vehicle speed to the set speed set with the main shift lever as a percentage on the setting screen D3. On the setting screen D3, the operator can select acceleration during the autonomous travel from multiple levels, such as "soft", "standard", or "quick".

In addition to the information mentioned above, the setting processor 311 sets well-known information, such as the type of the combine 1 (maximum number of rows to be reaped), a vehicle width, and a vehicle length.

The output processor 312 outputs to the combine 1 various pieces of setting information set by the setting processor 311. Based on operation of the operator, the output processor 312 outputs a work start instruction and a work end instruction to the combine 1.

Upon the operation control unit 31 accepts the work start instruction from the operator, the output processor 312 outputs the work start instruction to the combine 1. Thereby, the controller 11 of the combine 1 obtains the work start instruction from the operation terminal 3. Upon obtaining the work start instruction, the controller 11 causes the combine 1 to start the work and traveling. Upon the operation control unit 31 accepts the work start instruction from the operator, the output processor 312 outputs the work stop instruction to the combine 1. Thereby, the controller 11 of the combine 1 obtains the work stop instruction from the operation terminal 3. Upon obtaining the work stop instruction, the controller 11 causes the combine 1 to stop the work and traveling.

The operation terminal 3 may be accessible to a Web site (an agricultural support site) of an agricultural support service provided by a server (not shown) via the communication network N1. In this case, the operation terminal 3 can function as an operation terminal for the server by a browser program being executed by the operation control unit 31. The server includes the processing units mentioned above to execute each of the processes.

### Combine 1

FIG. 2 is an external view illustrating the combine 1 as viewed from the side. As shown in FIGS. 1 and 2, the combine 1 is equipped with a threshing unit 4, a sorting unit 5, a waste straw processing unit 6, a power unit 8, a steering unit 9, a controller 11, a storage unit 12, a positioning unit 13, a traveling unit 14, a reaping unit 15, a reservoir unit 16, and a communication unit 17. The combine 1 is configured as a head-feeding type combine. While traveling by the traveling unit 14, the combine 1 reaps culms by the reaping unit 15, threshes them by the threshing unit 4, sorts grains by the sorting unit 5, and reserves them in the reservoir unit 16. The combine 1 processes a waste straw after threshing by a waste straw processing unit 6. By the power supplied by the power unit 8, the combine 1 drives the traveling unit 14, the reaping unit 15, the reservoir unit 16, the threshing unit 4, the sorting unit 5, and the waste straw processing unit 6.

The traveling unit 14 is provided below a machine body frame 29, and includes a pair of crawler-type traveling devices 2 on each side and a transmission (not shown). The traveling unit 14 causes the combine 1 to travel in a forward-and-backward direction or to turn to a left-and-right direction by rotating crawlers of a crawler-type traveling device 2 by power (e.g., rotation power) transmitted from an engine 27 of the power unit 8. The transmission transmits the power (rotation power) of the power unit 8 to the crawler-type traveling device 2 and can also change the speed of the rotation power.

The reaping unit 15 is provided in front of the traveling unit 14, and performs reaping work for rows within the reapable number of rows. The reaping unit 15 includes a divider 28, a raising device 20, a cutting device 23, and a conveying device 7. The divider 28 divides grain culms in the field for every row and guides to the raising device 20 a predetermined number of grain culms for rows within the reapable number of rows. The raising device 20 raises the grain culms that are guided by the divider 28. The cutting device 23 cuts the grain culms raised by the raising device 20. The conveying device 7 conveys the grain culms cut by the cutting device 23 to the threshing unit 4.

The threshing unit 4 is provided in the rear of the reaping unit 15. The threshing unit 4 includes a feed chain 18 and a threshing cylinder 19. The feed chain 18 conveys to the threshing unit for threshing the grain culms conveyed from the conveying device 7 of the reaping unit 15, and further conveys the threshed grain culms, that is, waste straws to the waste straw processing unit 6. The threshing cylinder 19 threshes the grain culms being conveyed by the feed chain 18.

The sorting unit 5 is provided below the threshing unit 4. The sorting unit 5 includes a swing sorting device 21, an air blow sorting device 22, a grain conveying device (not shown), and a waste straw discharge device (not shown). The swing sorting device 21 sifts the threshed grain that falls from the threshing unit 4 and sorts the threshed grains into grains, straw wastes, etc. The air blow sorting device 22 further sorts the threshed grains sorted by the swing sorting device 21 into grains, straw wastes, etc., by air blow. The grain conveying device conveys to the reservoir unit 16 grains sorted by the swing sorting device 21 and the air blow sorting device 22. The waste straw discharge device discharges to the outside of the machine the waste straw and the like sorted by the swing sorting device 21 and the air blow sorting device 22.

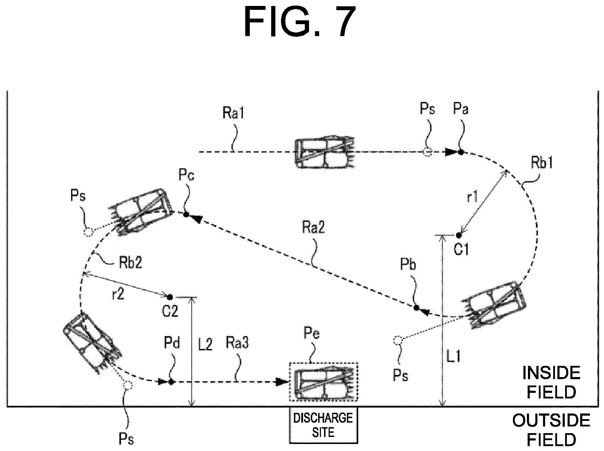

The reservoir unit 16 is disposed on the right side of the threshing unit 4. The reservoir unit 16 includes a reservoir tank (grain tank) 24 and a discharge device 25. The reservoir tank 24 reserves the grains conveyed from the sorting unit 5. The discharge device 25 is composed of an auger or the like at the discharge position Pe (see FIG. 7) and discharges the grains reserved in the reservoir tank 24 to the discharge site or the carrier vehicle.

The waste straw processing unit 6 is disposed behind the threshing unit 4. The waste straw processing unit 6 includes a waste straw conveying device (not shown) and a waste straw cutting device (not shown). The waste straw conveying device conveys the waste straws conveyed from the feed chain 18 of the threshing unit 4 to the waste straw cutting device. The waste straw cutting device cuts the waste straws conveyed by the waste straw conveying device, and discharges the cut waste straws to the outside of the machine.

The power unit 8 is provided above the traveling unit 14 and in front of the reservoir unit 16. The power unit 8 includes an engine 27 that generates rotational power. The power unit 8 transmits the rotational power generated by the engine 27 to the traveling unit 14, the reaping unit 15, the reservoir unit 16, the threshing unit 4, the sorting unit 5, and the waste straw processing unit 6.

The steering unit 9 is disposed above the power unit 8. Around a driver's seat on which the operator sits, the steering unit 9 includes, as operation tools for steering the travel of the combine 1, a steering wheel for ordering a turn of the machine body of the combine 1, a main shift lever and sub-shift lever for ordering change of the advancing speed or the retreating speed of the combine 1. The manual traveling of the combine 1 is performed by the traveling unit 14 that accepts operations of the steering wheel, the main shift lever, and the sub-shift lever of the steering unit 9. The steering unit 9 also includes a machinery to operate reaping work by the reaping unit 15, threshing work by the threshing unit 4, discharging work by the discharge device 25 in the reservoir unit 16, etc.

The positioning unit 13 acquires the combine 1's own vehicle position using a satellite positioning system such as GPS. For example, the positioning unit 13 receives a positioning signal from a positioning satellite via a positioning antenna, and acquires position information of the positioning unit 13, i.e., the combine 1's own position, based on the positioning signal.

The communication unit 17 (see FIG. 1) is a communication interface that connects the combine 1 to the communication network N1 in a wired or wireless manner, and conducts data communication with an external device such as the operation terminal 3 via the communication network N1 in accordance with a predetermined communication protocol.

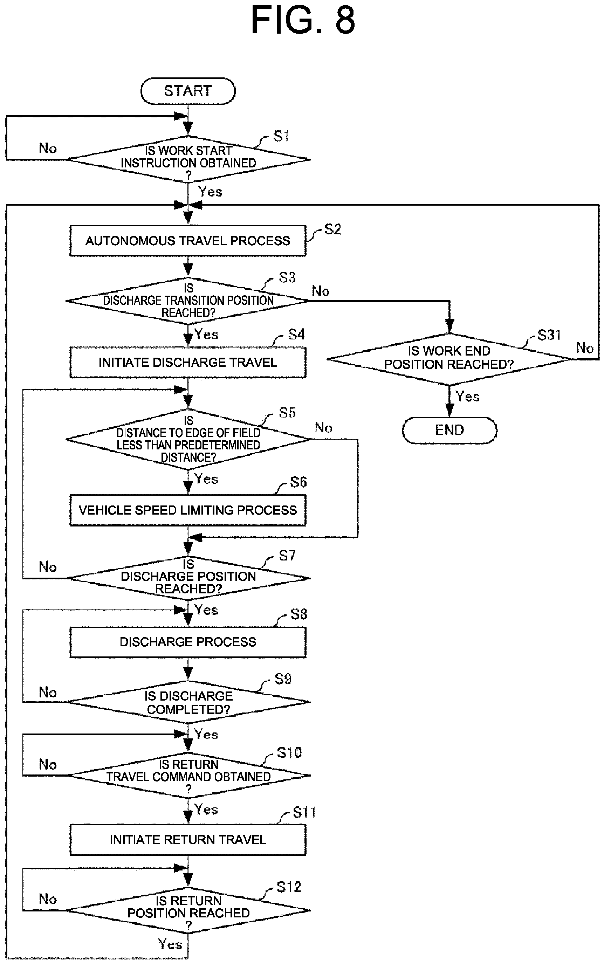

The storage unit 12 is a non-volatile storage unit such as an HDD and an SSD that stores various pieces of information. The storage unit 12 stores a control program such as an autonomous travel program for causing the controller 11 to execute an autonomous travel process described below (see FIG. 8). For example, the autonomous travel program is non-temporarily recorded in a computer-readable recording medium such as a flash ROM, an EEPROM, a CD or a DVD, read by a predetermined reading device (not shown), and stored in the storage unit 12. The autonomous travel program may be downloaded from a server (not shown) via the communication network N1 to the combine 1 and stored in the storage unit 12. In addition, the storage unit 12 stores various pieces of setting information obtained from the operation terminal 3.

The controller 11 has control devices such as a CPU, a ROM, and a RAM. The CPU is a processor that executes various types of arithmetic processes. The ROM is a non-volatile storage unit in which a control program such as a BIOS and an OS for causing the CPU to execute the various arithmetic processes are previously stored. The RAM is a volatile or non-volatile storage unit that stores various pieces of information and is used as a temporary storage memory for the various processes executed by the CPU. The controller 11 controls the combine 1 by causing the CPU to execute the various types of control programs that are in advance stored in the ROM or the storage unit 12.

Specifically, as shown in FIG. 1, the controller 11 includes various processing units, such as a traveling processor 111, a setting processor 112, an acquisition processor 113, and a reception processor 114. The controller 11 functions as the various processing units by causing the CPU to execute the various processes according to the autonomous travel program. Some or all of the processors may be composed of an electronic circuit. The autonomous travel program may be a program for causing a plurality of processors to function as the processing units.

The traveling processor 111 causes the combine 1 to travel autonomously according to the target route set for the field. Specifically, the traveling processor 111 obtains various pieces of setting information set for the field from the operation terminal 3. For example, the traveling processor 111 acquires the combine 1's own position from the positioning unit 13 during the reaping work, and controls the power unit 8, the traveling unit 14, and the reaping unit 15 such that the combine 1 performs the autonomous travel and the reaping work along the work route on the basis of the vehicle 1's own position and the work route included in the target route. Furthermore, the traveling processor 111 acquires the combine 1's own position from the positioning unit 13 during the reaping work, and controls the power unit 8 and the traveling unit 14 such that the combine 1 performs the autonomous travel along the discharge route on the basis of the vehicle 1's own position and the discharge route included in the target route.

The setting processor 112 controls the speed of the combine 1 during autonomous travel. Specifically, the setting processor 112 controls the vehicle speed so that the combine 1 does not go out of the field when traveling near the edge of the field, as well as so that the combine 1 does not stop unnecessarily near the edge of the field and continues to travel autonomously.

For example, in the case where a distance from a reference point to the edge of the field on the turning route is not more than a predetermined distance, the setting processor 112 sets the vehicle speed of the combine 1 on the turning route to a predetermined speed that is greater than the vehicle speed of the combine 1 on the turning route in which the distance from the reference point to the edge of the field exceeds the predetermined distance. The acquisition processor 113 acquires the distance from the reference point on the turning route to the edge of the field. For example, the acquisition processor 113 acquires the distance from the reference point on the turning route to the edge of the field at predetermined periods while the combine 1 is traveling autonomously.

The reference point is information representing a position of the turning route to identify a position relationship between the turning route and the edge of the field, and is a turning center point, for example. The turning center point can be identified based on a predetermined turning radius. The acquisition processor 113 obtains the distance from the turning center point to the edge of the field based on the current position of the combine 1 and the aforementioned turning radius.

The reception processor 114 accepts operations from the operator during the autonomous travel. For example, when an operator getting on the combine 1 operates the main shift lever while the combine 1 is traveling autonomously, the reception processor 114 accepts the operation. Upon the reception processor 114 accepts the operation of the main shift lever, the setting processor 112 changes the speed of the combine 1 based on the predetermined vehicle speed (see FIG. 6).

Next, an example of a travel method of the combine 1 during discharge operation according to the present embodiment will be explained using FIG. 7.

As shown in FIG. 7, the combine 1 creates the discharge route (an example of the target route of the present disclosure) from a discharge transition position to the discharge position Pe when performing discharge operation, and autonomously travels following the discharge route. The discharge route includes a straight advancing route Ra1, a turning route Rb1, a straight advancing route Ra2, a turning route Rb2, and a straight advancing route Ra3. When the combine 1 reaches the discharge transition position, the setting processor 112 creates the discharge route up to the discharge position Pe.

Upon the reception processor 114 accepts the operator's operation to change the vehicle speed with the main shift lever, the setting processor 112 controls the vehicle speed of the combine 1 based on the predetermined vehicle speed (set vehicle speed). Specifically, the combine 1 advances on the straight advancing route Ra1, where a ratio of the vehicle speed to the set speed of the main shift lever is set to 100% (see FIG. 6), and turns the turning route Rb1 from a turning start point Pa with a turning radius r1 centered at the turning center point C1, where a ratio of the vehicle speed to the set speed of the main shift lever is set to 80% (see FIG. 6). In this case, for example, if the operator moves the main shift lever to the maximum speed position when the combine 1 travels along the straight advancing route Ra1, the setting processor 112 sets the vehicle speed of the combine 1 to the predetermined 100% speed (e.g., upper speed limit of 4 km/h). For example, if the operator moves the main shift lever to the maximum speed position when the combine 1 travels along the turning route Rb1, the setting processor 112 sets the vehicle speed of the combine 1 to the predetermined 80% of the upper speed limit (e.g., 3.2 km/h). That is, the operator can change the speed of the combine 1 on the turning route Rb1 with an upper speed limit of 3.2 km/h. Here, since a distance L1 from the turning center point C1 of the turning route Rb1 to the edge of the field exceeds the predetermined distance, the vehicle speed of the combine 1 on the turning route Rb1 may be set without limiting it to the predetermined vehicle speed (80%).

When the combine 1 then reaches the end of the turning route Rb1 (turning end point Pb), it advances on the straight advancing route Ra2 where the ratio of the vehicle speed to the speed set by the main shift lever is set to 100%. On the straight advancing route Ra2, the operator can operate the main shift lever to change the vehicle speed within the upper speed limit of 4 km/h or less.

Then, in the turning route Rb2 following the straight advancing route Ra2, the distance L2 from the turning center point C2 to the edge of the field becomes not more than a predetermined distance. In this case, the setting processor 112 limits the vehicle speed of the combine 1 on the turning route Rb2 to the predetermined speed (80%). For example, the setting processor 112 limits the ratio of the vehicle speed to the speed set by the main shift lever to 50%. This results in an upper speed limit of 2 km/h for the combine 1. The setting processor 112 limits the vehicle speed of the combine 1 to 50% (2 km/h) or less of the maximum speed (4 km/h) according to the operation of the main shift lever. With the vehicle speed being limited, the combine 1 turns the turning route Rb2, where the ratio of the vehicle speed to the speed set by the main shift lever set at 50% or less, from the turning start point Pc with the turning radius r2 centered at the turning center point C2. That is, the combine 1 travels on the turning route Rb2 at 2 km/h or less. The turning route Rb1 is an example of a second turning route of the present disclosure, and the turning route Rb2 is an example of a first turning route of the present disclosure.

Here, the setting processor 112 sets a virtual point Ps at a predetermined position in the advancing direction of the combine 1. The traveling processor 111 causes the combine 1 to stop when the virtual point Ps is outside the field (see FIG. 3).

Specifically, the setting processor 112 sets the virtual point Ps at a position far from the vehicle body of the combine 1 by the braking distance of the combine 1 in the advancing direction. The setting processor 112 also sets the virtual point Ps at a position farther from the combine 1 as the speed of the combine 1 increases, and sets the virtual point Ps at a position closer to the combine 1 as the vehicle speed of the combine 1 decreases.

According to the example shown in FIG. 7, the setting processor 112 sets the vehicle speed in the turning route Rb2 to be lower than the vehicle speed in the turning route Rb1, so that the position of the virtual point Ps when the combine 1 travels the turning route Rb2 is set to a closer position to the combine 1 than the position of the virtual point Ps when the combine 1 travels the turning route Rb1.

This allows the virtual point Ps to be closer to the body of the combine 1 when it travels along the turning route Rb2, so that it is difficult for the virtual point Ps to be outside the field, especially when traveling near the edge of the field. This allows to prevent the combine 1 from stopping near the edge of the field.

When the combine 1 travels up to the turning end point Pd without stopping on the turning route Rb2, the setting processor 112 then sets the vehicle speed of the combine 1 on the straight advancing route Ra3 to the same vehicle speed as the turning route Rb2. This allows the combine 1 to advance straight up to the discharge position Pe at a vehicle speed within 50% (2 km/h) or less of the maximum speed.

In such a way, since the virtual point Ps is set at a position according to the vehicle speed, for example, the setting processor 112 may set the vehicle speed on the turning route Rb2 to a speed at which the virtual point Ps is within the field. Specifically, the closer the turning center point C2 is to the edge of the field, the easier it is for the virtual point Ps to be outside the field when the combine 1 turns the turning route Rb2, as well as the farther the turning center point C2 is from the edge of the field, the harder it is for the virtual point Ps to be outside the field when the combine 1 turns the turning route Rb2. Thus, the closer the turning center point C2 is to the edge of the field, the lower the setting processor 112 sets the vehicle speed on the turning route Rb2. In other words, the setting processor 112 sets the vehicle speed on the turning route Rb2 to the speed at which the virtual point Ps on the turning route Rb2 is within the field. This prevent the virtual point Ps from being outside the field when the combine 1 travels near the edge of the field, so that the autonomous travel can be surely continued. The setting processor 112 may set the vehicle speed on the turning route Rb2 to a speed at which the travel route of the combine 1 does not deviate outward from the turning route Rb2.

As mentioned above, the setting processor 112 sets the vehicle speed of the combine 1 on the turning route where the distance from the turning center point to the edge of the field is not more than the predetermined distance (turning route Rb2 shown in FIG. 7) to a speed that is lower than the vehicle speed of the combine 1 on the turning route (turning route Rb1) where the distance from the turning center point to the edge of the field exceeds the predetermined distance.

The reception processor 114 also accepts operation to change the vehicle speed of the combine 1 during the autonomous travel from the predetermined speed. In the turning route where the distance from the turning center point to the edge of the field exceeds the predetermined distance (turning route Rb1 shown in FIG. 7), the reception processor 114 permits operation to change the vehicle speed of the combine 1 within a range of the set speed (e.g., within 80%), as well as in the turning route where the distance from the turning center point to the edge of the field is not more than the predetermined distance (the turning route Rb2 shown in FIG. 7), the reception processor 114 permits operation to change the vehicle speed of the combine 1 within a range of a speed lower than the set speed (e.g., within 50%).

As another embodiment, the vehicle speed for the work route (straight advancing route and turning route) may be set as a specific speed instead of a percentage, and the combine 1 may autonomously travel (unmanned driving) along the work route according to the set speed. In this case, the setting processor 112 may control the vehicle speed based on the position information of the combine 1. For example, when the combine 1 travels on the turning route where the distance from the turning center point to the edge of the field exceeds the predetermined distance (turning route Rb1 shown in FIG. 7), the setting processor 112 sets the vehicle speed of the combine 1 to the predetermined first vehicle speed, as well as when the combine 1 travels on the turning route where the distance from the turning center point to the edge of the field is not more than the predetermined distance (the turning route Rb2 shown in FIG. 7), the reception processor 114 sets the vehicle speed of the combine 1 to a speed lower than the first vehicle speed.

### Autonomous Travel Process

An example of the autonomous travel process performed by the autonomous travel system 10 is described below with reference to FIG. 8.

The present disclosure can be understood as a disclosure of an autonomous travel method that executes one or more steps included in the aforementioned autonomous travel process. Furthermore, one or more steps included in the autonomous travel process explained herein may be omitted as appropriate. Note that each step in the autonomous travel process may be executed in a different order as long as the same working effect is obtained. Furthermore, although a case where the controller 11 executes each step in the autonomous travel process is described as an example, an autonomous travel method in which one or more processors execute each of steps in the autonomous travel process in a distributed manner is also considered as another embodiment.

In step S1, the controller 11 determines whether or not having obtained the work start instruction. If the controller 11 determines that the work start instruction from the operation terminal 3 is obtained (S1: Yes), the process proceeds to step S2. The controller 11 waits until acquiring the work start instruction (S1: No).

At step S2, the controller 11 executes the autonomous travel process. Specifically, the controller 11 causes the combine 1 to travel autonomously according to the target route included in the setting information obtained from the operation terminal 3. For example, the controller 11 causes the combine 1 to perform the work (reaping work) in a work area in the field while causing the combine 1 to travel autonomously along the work route. The controller 11 may be able to accept operation of the main shift lever by the operator getting on the combine 1. In this case, the controller 11 changes the vehicle speed of the combine 1 during the autonomous travel in response to the operator's operation. For example, in the case where the straight advancing speed is set to 100% and the turning speed is set to 80% in the aforementioned setting information (see FIG. 6), the controller 11 sets the vehicle speed of the combine 1 to 100% of the speed (upper limit speed) when the operator shifts the main shift lever to the maximum speed position when the combine 1 travels on a straight advancing route, as well as in the case where the operator shifts the main shift lever to the maximum speed position when the combine 1 travels on the turning route, the controller 11 sets the vehicle speed of the combine 1 to 80% of the upper speed limit.

Next, in step S3, the controller 11 determines whether or not the combine 1 has reached the discharge transition position. The controller 11 determines that the combine 1 has reached the discharge transition position when it reaches a position where the reservoir amount in the reservoir tank 24 reaches a predetermined amount. When the controller 11 determines that the combine 1 has reached the discharge transition position (S3: Yes), the controller 11 moves the process to step S4. On the other hand, if the controller 11 determines that the combine 1 has not reached the discharge transition position (S3: No), the controller moves the process to step S31. As another embodiment, in step S3, the controller 11 may determine whether or not the empty capacity of the reservoir tank 24 is less than a predetermined amount.

In step S31, the controller 11 determines whether or not the combine 1 has reached the work end position. When the controller 11 determines that the combine 1 has reached the work end position (the end of the work route) (S31: Yes), the controller 11 terminates the process. On the other hand, if the controller 11 determines that the combine 1 has not yet reached the work end position (S31: No), the controller 11 moves the process to step S2.

In step S4, the controller 11 causes the combine 1 to initiate the discharge travel. For example, as shown in FIG. 7, the controller 11 creates the discharge route from the discharge transition position to the discharge position Pe and causes the combine 1 to travel autonomously following the discharge route. Specifically, the controller 11 causes the combine 1 to travel autonomously to the discharge position Pe along the straight advancing route Ra1, the turning route Rb1, the straight advancing route Ra2, the turning route Rb2, and the straight advancing route Ra3. Furthermore, the controller 11 controls the vehicle speed of the combine 1 according to the predetermined vehicle speed (see FIG. 6) to cause the combine 1 to travel autonomously to the discharge position Pe.

In step S5, the controller 11 determines whether or not the distance from the reference point of the turning route (turning center point) to the edge of the field is not more than a predetermined distance. The controller 11 acquires the distance from the turning center point of the turning route to the edge of the field. If determining that the distance is not more than the predetermined distance (S5: Yes), the controller 11 moves the process to step S6. On the other hand, if the controller 11 determines that the travel route is the straight advancing route, or determines that the distance from the turning center point of the turning route to the edge of the field is greater than the predetermined distance (S5: No), the controller 11 moves the process to step S7.

In the example shown in FIG. 7, when the combine 1 travels on the turning route Rb1, the controller 11 moves the process to step S7 because the distance L1 from the turning center point C1 of the turning route Rb1 to the edge of the field exceeds the predetermined distance. In contrast, when the combine 1 travels on the turning route Rb2, the controller 11 moves the process to step S6 because the distance L2 from the turning center point C2 of the turning route Rb2 to the edge of the field is not more than the predetermined distance.

In step S6, the controller 11 executes the process of limiting the vehicle speed of the combine 1. Specifically, the controller 11 limits the vehicle speed of the combine 1 on the turning route to not faster than the predetermined speed. For example, the controller 11 sets the speed at which the virtual point Ps is within the field on the turning route Rb2 as the upper limit speed of the vehicle speed on the turning route Rb2.

For example, the controller 11 limits the vehicle speed of the combine 1 on the turning route Rb2 to 50% less than the predetermined speed (80%). In other words, the controller 11 sets the vehicle speed of the combine 1 within a range of 50% or less of the maximum speed in response to operation of the main shift lever. In this way, the controller 11 does not set a limit on the predetermined vehicle speed (e.g., 80%) when the combine 1 travels on the turning route Rb1 far from the edge of the field, while the controller 11 sets an upper limit (e.g., 50%) on the predetermined vehicle speed (80%) when the combine 1 travels on the turning route Rb2 near the edge of the field. In this way, the controller 11 sets the vehicle speed of the combine 1 on the turning route where the distance from the turning center point to the edge of the field is not more than the predetermined distance to a smaller speed than the vehicle speed of the combine 1 on the turning route where the distance from the turning center point to the edge of the field exceeds the predetermined distance.

In step S7, the controller 11 determines whether or not the combine 1 has reached the discharge position Pe. If the controller 11 determines that the combine 1 has reached the discharge position Pe (S7: Yes), the controller 11 moves the process to step S8. On the other hand, if the controller 11 determines that the combine 1 has not yet reached the discharge position Pe (S7: No), the controller 11 moves the process to step S5. The controller 11 executes repeatedly steps S5 and S6 until the combine 1 reaches the discharge position Pe.

In step S8, the controller 11 executes the discharge process. Specifically, the controller 11 causes the reservoir unit 16 to be activated to discharge grains stored in the reservoir tank 24 to the discharge site.

Next, in step S9, the controller 11 determines whether or not the discharge process is completed. If determining that the discharge process is completed (S9: Yes), the controller 11 moves the process to step S10. On the other hand, if determining that the discharge process is not yet completed (S9: No), the controller 11 moves the process to step S8.

In step S10, the controller 11 determines whether or not a return travel command has been obtained. For example, when the discharge process is completed, the controller 11 notifies the operator of the completion of the discharge process and accepts the return travel command from the operator. If obtaining the return travel command (S 10: Yes), the controller 11 moves the process to step S11. The controller 11 waits until it obtains the return travel command (S10: No).

In step S11, the controller 11 causes the combine to initiate the return travel. Specifically, the controller 11 creates a return route from the discharge position Pe to a predetermined return position, and causes the combine 1 to travel autonomously following the return route. Although the return position may be set at the same position as the discharge transition position, it may be set at a position closer to the discharge position Pe on the work route in view of the condition of the work state and the discharge position Pe.

Next, in step S12, the controller 11 determines whether or not the combine 1 has reached the return position. If determining that the combine 1 has reached the return position (S 12: Yes), the controller 11 moves the process to step S2. Otherwise, the controller 11 causes the combine 1 to continue the return travel until the combine 1 reaches the return position (S12: No).

When the combine 1 reaches the return position (S12: Yes), the controller 11 causes the combine 1 to resume the autonomous travel along the work route (S2). The controller 11 executes repeatedly the above processes until the combine 1 reaches the work end position (S31: No). In this way, the autonomous travel system 10 executes the above autonomous travel process.

As explained above, the autonomous travel system 10 of the present embodiment causes the combine 1 to travel autonomously following the target route including the turning route in the field. Furthermore, the autonomous travel system 10 obtains the distance from the reference point of the turning route to the edge of the field, and sets the vehicle speed of the combine 1 on the first turning route where the distance from the reference point to the edge of the field is not more than the predetermined distance to a predetermined speed that is lower than the vehicle speed of the combine 1 on the second turning route where the distance from the reference point to the edge of the field exceeds the predetermined distance.

According to the above mentioned configuration, when the combine 1 autonomously traveling along the turning route approaches the edge of the field, the vehicle speed of the combine 1 is set to a smaller speed. This allows the position of the virtual point Ps set by the combine 1 to be closer to the body of the combine 1 (see FIG. 7), so that it is ensured that the virtual point Ps is within the field even when the combine 1 travels near the edge of the field, thereby preventing the combine 1 from stopping. Thus, it is possible to prevent the combine 1 autonomously traveling near the edge of the field from going out of the field and to cause the combine 1 to continue the autonomous travel. It is also possible to improve the safety of the autonomous travel while reducing unnecessary stopping of the combine 1.

### Other Embodiments

The present disclosure is not limited to the above described embodiment. Other embodiments of the present disclosure will be described below.

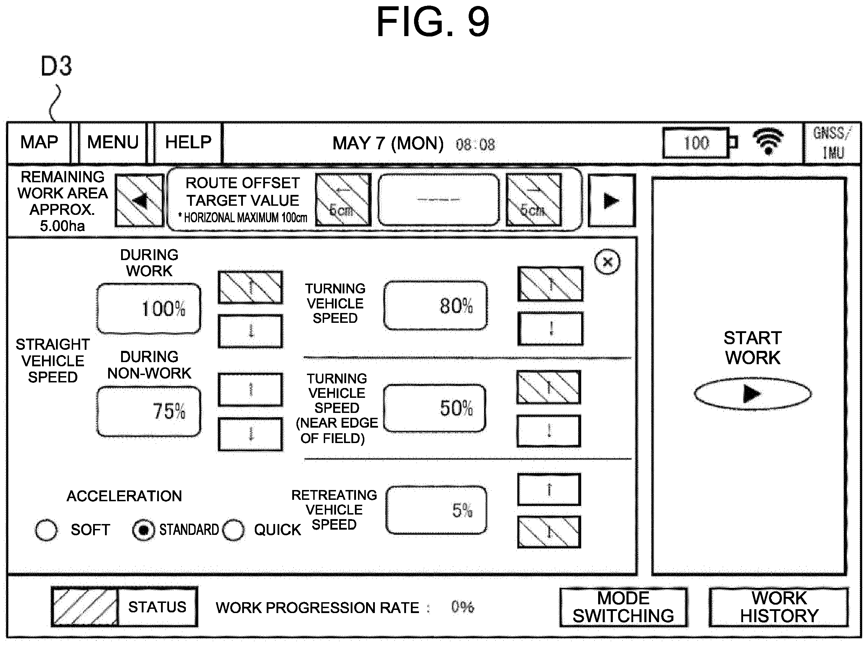

In the embodiment described above, when the combine 1 travels on the turning route where the distance from the turning center point to the edge of the field is not more than the predetermined distance during the autonomous travel, the controller 11 sets the vehicle speed on the turning route. As another embodiment, the vehicle speed on the turning route where the distance from the turning center point to the edge of the field is not more than the predetermined distance may be set in advance. For example, as shown in FIG. 9, the operator sets on the setting screen D3 the vehicle speed on the normal turning route where the distance from the turning center point to the edge of the field exceeds the predetermined distance to 80%, as well as sets the vehicle speed on the turning route near the edge of the field where the distance from the turning center point to the edge of the field is not more than the predetermined distance to 50%. In this case, the controller 11 sets the vehicle speed of the combine 1 on each turning route based on the vehicle speed set in advance at the operation terminal 3. The vehicle speed on the normal turning route and the speed on the turning route near the edge of the field may be set as a specific speed other than as a percentage.

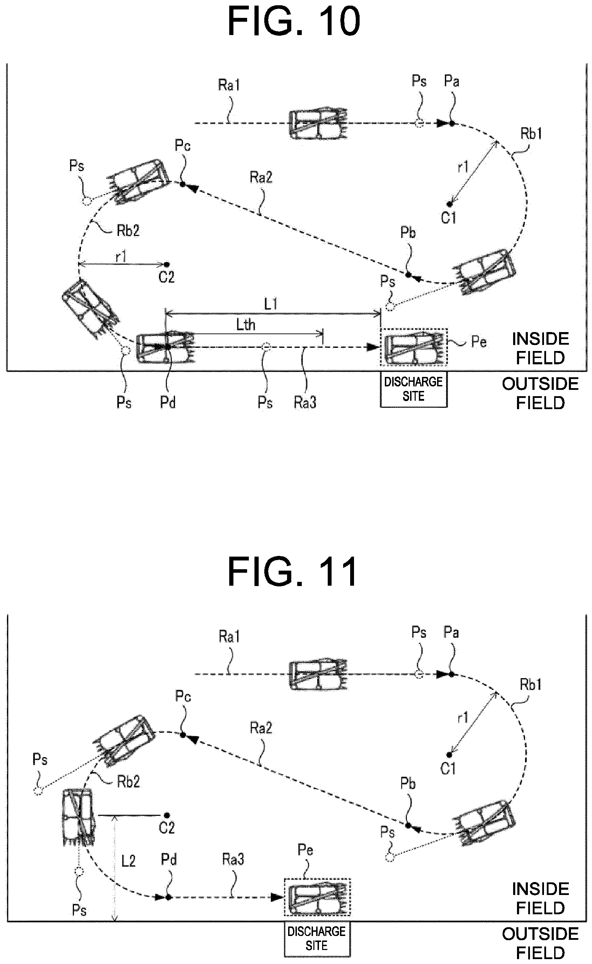

In the embodiment described above, the controller 11 sets the vehicle speed of the combine 1 on the straight advancing route Ra3 following the turning route Rb2 near the edge of the field to the same speed as the vehicle speed of the combine 1 on the turning route Rb2. As another embodiment, for example, as shown in FIG. 10, when the straight advancing route Ra3 following the turning route Rb2 is along the edge of the field and the distance L1 of the straight advancing route Ra3 is longer than a predetermined distance Lth, the controller 11 may set the vehicle speed of the combine 1 on the straight advancing route Ra3 to a higher speed than the vehicle speed of the combine 1 on the turning route Rb2 (e.g., the straight advancing vehicle speed during non-working (see FIG. 6)). This allows the combine 1 to reach the discharge position Pe earlier while preventing the combine 1 from going out of the field, thereby improving work efficiency. When the distance of the straight advancing route Ra3 is longer than the predetermined distance, the controller 11 may set the vehicle speed of the combine 1 on the straight advancing route Ra3 to a speed according to the distance L1 of the straight advancing route Ra3.

In the embodiment described above, when the combine 1 travels on the turning route Rb2 where the distance from the turning center point to the edge of the field is not more than the predetermined distance, the controller 11 sets the vehicle speed on the turning route Rb2 from the turning start point Pc to a smaller speed (see FIG. 7). As another embodiment, the controller 11 may set the vehicle speed to a smaller speed from the middle of the turning route Rb2. Specifically, in the turning route Rb2, when the distance from the current position of the combine 1 to the edge of the field exceeds a threshold value, the controller 11 causes the combine 1 to travel at the first vehicle speed not faster than the predetermined speed (e.g., set speed of 80% (see FIG. 6)), while when the distance from the current position of the combine 1 to the edge of the field is not more than the threshold value, the controller 11 causes the combine 1 to travel at the second vehicle (e.g., 50%) which is less than the first vehicle speed. The threshold value may be set to the distance L2 from the turning center point C2 to the edge of the field, for example, as shown in FIG. 11. As shown in FIG. 11, the virtual point Ps is set on the turning route Rb2 at a position far from the combine 1 when the distance from the combine 1 to the edge of the field is greater than the distance L2, while the virtual point Ps is set on the turning route Rb2 at a position closer to the combine 1 when the distance from the combine 1 to the edge of the field is not more than the distance L2. This allows the combine 1 to travel at a normal speed at the position where the virtual point Ps is unlikely to be outside the field, while allowing the combine 1 to travel at a smaller speed from a position where the virtual point Ps is more likely to be outside the field. This makes it possible to improve the work efficiency while preventing the combine 1 from going out of the field. The threshold value is set based on the set speed and the position of the turning center point.

As another embodiment, the operation control unit 31 of the operation terminal 3 may cause a work screen to display the work route (not shown) to display the turning route near the edge of the field, where the distance from the turning center point to the edge of the field is not more than the predetermined distance, in a different display style (color, line type, etc.) from other routes. The operation control unit 31 may also cause the work screen to display a message which prompts attention or to output a voice sound when the combine 1 travels along the turning route near the edge of the field. This allows the operator to be alerted. Similarly, the operation control unit 31 may cause the work screen to display the aforementioned message or to output the voice sound when the combine 1 travels on the straight advancing route following the turning route near the edge of the field.

In the above mentioned embodiment, the turning center point is mentioned as an example of a reference point for the turning route. However, the reference point is not limited to the turning center point, and may be the turning start point (e.g., Pa, Pc, etc. shown in FIG. 7) or the turning end point (e.g., Pb, Pd, etc. shown in FIG. 7). The predetermined distance in the present disclosure may be set to different values for each turning center point, turning start point, and turning end point. The controller 11 may determine whether or not any one of the turning center point, the turning start point, and the turning end point is not more than the corresponding predetermined distance (corresponding to step S5 shown in FIG. 8). The controller 11 may also determine whether or not all of the turning center point, the turning start point, and the turning end point are not more than respectively-corresponding predetermined distances.

In the above embodiments, the combine 1 is mentioned as an example of a work vehicle. However, the work vehicle of the present disclosure is not limited to the combine 1 and may be various types of work vehicles, such as a tractor, a rice transplanter, and a construction machinery.

## Claims

1. An autonomous travel method comprising:
causing a work vehicle (1) to perform an autonomous travel following a target route including a turning route (Rb1, Rb2) in a work area; **characterized in that** the method further comprising:
acquiring a distance from a reference point of the turning route (Rb1, Rb2) to an edge of the work area; and
setting a vehicle speed of the work vehicle (1) on a first turning route (Rb2) where the distance from the reference point to the edge of the work area is not more than a predetermined distance to a predetermined speed which is slower than a vehicle speed of the work vehicle (1) on a second turning route (Rb1) where the distance from the reference point to the edge of the work area exceeds the predetermined distance.

2. The autonomous travel method according to claim 1 further comprising:
setting a virtual point (Ps) at a predetermined position in an advancing direction of the work vehicle (1) and causing the work vehicle (1) to stop traveling when the virtual point (Ps) is outside the work area;
setting the virtual point (Ps) at a position far from the work vehicle (1) as the vehicle speed of the work vehicle (1) increases; and
setting the predetermined speed to a speed at which the virtual point (Ps) is within the work area on the first turning route (Rb2).

3. The autonomous travel method according to claim 2 further comprising:
setting the virtual point (Ps) at the predetermined position far from a vehicle body of the work vehicle (1) by a braking distance of the work vehicle (1) in the advancing direction.

4. The autonomous travel method according to claim 1 further comprising:
accepting operation to change the vehicle speed of the work vehicle (1) during the autonomous travel from a predetermined set speed;
permitting on the first turning route (Rb2) the operation to change the vehicle speed of the work vehicle (1) within a range of the predetermined speed that is lower than the set speed; and
permitting on the second turning route (Rb1) the operation to change the vehicle speed of the work vehicle (1) within a range of the set speed.

5. The autonomous travel method according to claim 1 further comprising
setting the vehicle speed of the work vehicle (1) on a straight advancing route (Ra1, Ra2, Ra3) to the vehicle speed of the work vehicle (1) on the first turning route (Rb2) when the straight advancing route (Ra1, Ra2, Ra3) following the first turning route (Rb2) is a route along the edge of the work area.

6. The autonomous travel method according to claim 1 further comprising
setting the vehicle speed of the work vehicle (1) on a straight advancing route (Ra1, Ra2, Ra3) to a speed greater than the predetermined speed when the straight advancing route (Ra1, Ra2, Ra3) following the first turning route (Rb2) is along the edge of the work area and a length of the straight advancing route (Rb2) is longer than a predetermined length.

7. The autonomous travel method according to claim 6 further comprising
setting the vehicle speed of the work vehicle (1) on the straight advancing route (Ra1, Ra2, Ra3) to a speed corresponding to the length of the straight advancing route (Ra1, Ra2, Ra3) when the length of the straight advancing route (Ra1, Ra2, Ra3) is longer than a predetermined length.

8. The autonomous travel method according to claim 1 further comprising:
Causing the work vehicle (1) to travel at a first vehicle speed that is not faster than the predetermined speed when in the first turning route (Rb2) the distance from a current position of the work vehicle (1) to the edge of the work area exceeds a threshold value; or
causing the work vehicle (1) to travel at a second vehicle speed that is not faster than the first vehicle speed when in the first turning route (Rb2) the distance from the current position of the work vehicle (1) to the edge of the work area is not more than the threshold value.

9. The autonomous travel method according to any one of claims 1 to 8, wherein the reference point is one of a turning center point (C1, C2) of the turning route (Rb1, Rb2), a start point of the turning route (Rb1, Rb2), or an end point of the turning route (Rb1, Rb2).

10. An autonomous travel system comprising:
a traveling processor (111) to cause a work vehicle (1) to perform an autonomous travel following a target route including a turning route (Rb1, Rb2) in a work area;
an acquisition processor (113) to acquire a distance from a reference point of the turning route (Rb1, Rb2) to an edge of the work area; and
a setting processor (112) to set a vehicle speed of the work vehicle (1) on a first turning route (Rb2) where the distance from the reference point to the edge of the work area is not more than a predetermined distance to a predetermined speed which is slower than a vehicle speed of the work vehicle (1) on a second turning route where the distance from the reference point to the edge of the work area exceeds the predetermined distance.

11. An autonomous travel program product to cause one or more processors to execute the procedures comprising:
causing a work vehicle (1) to perform an autonomous travel following a target route including a turning route (Rb1, Rb2) in a work area;
acquiring a distance from a reference point of the turning route (Rb1, Rb2) to an edge of the work area; and
setting a vehicle speed of the work vehicle (1) on a first turning route (Rb2) where the distance from the reference point to the edge of the work area is not more than a predetermined distance to a predetermined speed which is slower than a vehicle speed of the work vehicle (1) on a second turning route (Rb1) where the distance from the reference point to the edge of the work area exceeds the predetermined distance.

## Patentansprüche

1. Verfahren für autonome Fahrt, umfassend:
Veranlassen, dass ein Arbeitsfahrzeug (1) eine autonome Fahrt durchführt, die einer Zielroute, welche eine Wenderoute (Rb1, Rb2) beinhaltet, in einem Arbeitsbereich folgt; **gekennzeichnet dadurch, dass** das Verfahren ferner Folgendes umfasst:
Erfassen eines Abstands von einem Referenzpunkt der Wenderoute (Rb1, Rb2) zu einem Rand des Arbeitsbereichs; und
Einstellen einer Fahrzeuggeschwindigkeit des Arbeitsfahrzeugs (1) auf einer ersten Wenderoute (Rb2), wo der Abstand von dem Referenzpunkt zu dem Rand des Arbeitsbereichs nicht mehr als einen vorherbestimmten Abstand beträgt, auf eine vorherbestimmte Geschwindigkeit, die langsamer als eine Fahrzeuggeschwindigkeit des Arbeitsfahrzeugs (1) auf einer zweiten Wenderoute (Rb1) ist, wo der Abstand von dem Referenzpunkt zu dem Rand des Arbeitsbereichs den vorherbestimmten Abstand überschreitet.

2. Verfahren für autonome Fahrt nach Anspruch 1, ferner umfassend:
Einstellen eines virtuellen Punktes (Ps) an einer vorherbestimmten Position in einer Fortbewegungsrichtung des Arbeitsfahrzeugs (1) und Veranlassen, dass das Arbeitsfahrzeug (1) das Fahren stoppt, wenn der virtuelle Punkt (Ps) außerhalb des Arbeitsbereichs liegt;
Einstellen des virtuellen Punktes (Ps) an einer von dem Arbeitsfahrzeug (1) entfernten Position, wenn die Fahrzeuggeschwindigkeit des Arbeitsfahrzeugs (1) ansteigt; und
Einstellen der vorherbestimmten Geschwindigkeit auf eine Geschwindigkeit, bei welcher der virtuelle Punkt (Ps) auf der ersten Wenderoute (Rb2) innerhalb des Arbeitsbereichs liegt.

3. Verfahren für autonome Fahrt nach Anspruch 2, ferner umfassend:
Einstellen des virtuellen Punktes (Ps) an der vorherbestimmten Position, die von einem Fahrzeugkörper des Arbeitsfahrzeugs (1) um einen Bremsabstand des Arbeitsfahrzeugs (1) in der Fortbewegungsrichtung entfernt ist.

4. Verfahren für autonome Fahrt nach Anspruch 1, ferner umfassend:
Annehmen eines Bedienvorgangs, um die Fahrzeuggeschwindigkeit des Arbeitsfahrzeugs (1) während der autonomen Fahrt von einer vorherbestimmten eingestellten Geschwindigkeit zu ändern;
Zulassen auf der ersten Wenderoute (Rb2), dass der Bedienvorgang die Fahrzeuggeschwindigkeit des Arbeitsfahrzeugs (1) innerhalb eines Bereichs der vorherbestimmten Geschwindigkeit ändert, der niedriger als die eingestellte Geschwindigkeit ist; und
Zulassen auf der zweiten Wenderoute (Rb1), dass der Bedienvorgang die Fahrzeuggeschwindigkeit des Arbeitsfahrzeugs (1) innerhalb eines Bereichs der eingestellten Geschwindigkeit ändert.

5. Verfahren für autonome Fahrt nach Anspruch 1, ferner umfassend:
Einstellen der Fahrzeuggeschwindigkeit des Arbeitsfahrzeugs (1) auf einer geraden Fortbewegungsroute (Ra1, Ra2, Ra3) auf die Fahrzeuggeschwindigkeit des Arbeitsfahrzeugs (1) auf der ersten Wenderoute (Rb2), wenn die gerade Fortbewegungsroute (Ra1, Ra2, Ra3), welche auf die erste Wenderoute (Rb2) folgt, eine Route entlang des Rands des Arbeitsbereichs ist.

6. Verfahren für autonome Fahrt nach Anspruch 1, ferner umfassend:
Einstellen der Fahrzeuggeschwindigkeit des Arbeitsfahrzeugs (1) auf einer geraden Fortbewegungsroute (Ra1, Ra2, Ra3) auf eine Geschwindigkeit, die größer als die vorherbestimmte Geschwindigkeit ist, wenn die gerade Fortbewegungsroute (Ra1, Ra2, Ra3), welche auf die erste Wenderoute (Rb2) folgt, entlang dem Rand des Arbeitsbereichs verläuft und eine Länge der geraden Fortbewegungsroute (Rb2) länger ist als eine vorherbestimmte Länge.

7. Verfahren für autonome Fahrt nach Anspruch 6, ferner umfassend:
Einstellen der Fahrzeuggeschwindigkeit des Arbeitsfahrzeugs (1) auf der geraden Fortbewegungsroute (Ra1, Ra2, Ra3) auf eine Geschwindigkeit entsprechend der Länge der geraden Fortbewegungsroute (Ra1, Ra2, Ra3), wenn die Länge der geraden Fortbewegungsroute (Ra1, Ra2, Ra3) länger ist als eine vorherbestimmte Länge.

8. Verfahren für autonome Fahrt nach Anspruch 1, ferner umfassend:
Veranlassen, dass das Arbeitsfahrzeug (1) in einer ersten Fahrzeuggeschwindigkeit fährt, die nicht schneller als die vorherbestimmte Geschwindigkeit ist, wenn auf der ersten Wenderoute (Rb2) der Abstand von einer aktuellen Position des Arbeitsfahrzeugs (1) zu dem Rand des Arbeitsbereichs einen Schwellenwert überschreitet; oder
Veranlassen, dass das Arbeitsfahrzeug (1) in einer zweiten Fahrzeuggeschwindigkeit fährt, die nicht schneller als die erste Fahrzeuggeschwindigkeit ist, wenn auf der ersten Wenderoute (Rb2) der Abstand von der aktuellen Position des Arbeitsfahrzeugs (1) zu dem Rand des Arbeitsbereichs nicht mehr als der Schwellenwert ist.

9. Verfahren für autonome Fahrt nach einem der Ansprüche 1 bis 8, wobei der Referenzpunkt einer aus einem Wendemittelpunkt (C1, C2) der Wenderoute (Rb1, Rb2), einem Startpunkt der Wenderoute (Rb1, Rb2) oder einem Endpunkt der Wenderoute (Rb1, Rb2) ist.

10. System für autonome Fahrt, umfassend:
einen Fahrprozessor (111), um zu veranlassen, dass ein Arbeitsfahrzeug (1) eine autonome Fahrt durchführt, die einer Zielroute, welche eine Wenderoute (Rb1, Rb2) beinhaltet, in einem Arbeitsbereich folgt;
einen Erfassungsprozessor (113), um einen Abstand von einem Referenzpunkt der Wenderoute (Rb1, Rb2) zu einem Rand des Arbeitsbereichs zu erfassen; und
einen Einstellprozessor (112), um eine Fahrzeuggeschwindigkeit des Arbeitsfahrzeugs (1) auf einer ersten Wenderoute (Rb2) einzustellen, wo der Abstand von dem Referenzpunkt zu dem Rand des Arbeitsbereichs nicht mehr als einen vorherbestimmten Abstand bei einer vorherbestimmten Geschwindigkeit beträgt, welche langsamer als eine Fahrzeuggeschwindigkeit des Arbeitsfahrzeugs (1) auf einer zweiten Wenderoute ist, wo der Abstand von dem Referenzpunkt zu dem Rand des Arbeitsbereichs den vorherbestimmten Abstand überschreitet.

11. Programmprodukt für autonome Fahrt, um zu veranlassen, dass ein oder mehrere Prozessoren die Abläufe ausführen, welche Folgendes umfassen:
Veranlassen, dass ein Arbeitsfahrzeug (1) eine autonome Fahrt durchführt, die einer Zielroute, welche eine Wenderoute (Rb1, Rb2) beinhaltet, in einem Arbeitsbereich folgt;
Erfassen eines Abstands von einem Referenzpunkt der Wenderoute (Rb1, Rb2) zu einem Rand des Arbeitsbereichs; und
Einstellen einer Fahrzeuggeschwindigkeit des Arbeitsfahrzeugs (1) auf einer ersten Wenderoute (Rb2), wo der Abstand von dem Referenzpunkt zu dem Rand des Arbeitsbereichs nicht mehr als einen vorherbestimmten Abstand beträgt, auf eine vorherbestimmte Geschwindigkeit, die langsamer als eine Fahrzeuggeschwindigkeit des Arbeitsfahrzeugs (1) auf einer zweiten Wenderoute (Rb1) ist, wo der Abstand von dem Referenzpunkt zu dem Rand des Arbeitsbereichs den vorherbestimmten Abstand überschreitet.

## Revendications

1. Procédé de déplacement autonome comprenant :
le fait d'amener un véhicule de travail (1) à effectuer un déplacement autonome suivant un itinéraire cible incluant un itinéraire avec virages (Rb1, Rb2) dans une zone de travail ; **caractérisé en ce que** le procédé comprend en outre :
l'acquisition d'une distance depuis un point de référence de l'itinéraire avec virages (Rb1, Rb2) jusqu'à un bord de la zone de travail ; et
la définition d'une vitesse de véhicule du véhicule de travail (1) sur un premier itinéraire avec virages (Rb2), où la distance depuis le point de référence jusqu'au bord de la zone de travail n'est pas supérieure à une distance prédéterminée, à une vitesse prédéterminée qui est plus lente qu'une vitesse de véhicule du véhicule de travail (1) sur un deuxième itinéraire avec virages (Rb1) où la distance depuis le point de référence jusqu'au bord de la zone de travail dépasse la distance prédéterminée.

2. Procédé de déplacement autonome selon la revendication 1, comprenant en outre :
la définition d'un point virtuel (Ps) à une position prédéterminée dans une direction d'avancement du véhicule de travail (1) et le fait d'amener le véhicule de travail (1) à arrêter de se déplacer lorsque le point virtuel (Ps) est en dehors de la zone de travail ;
la définition du point virtuel (Ps) à une position éloignée du véhicule de travail (1) à mesure que la vitesse de véhicule du véhicule de travail (1) augmente ; et
la définition de la vitesse prédéterminée à une vitesse à laquelle le point virtuel (Ps) se trouve dans la zone de travail sur le premier itinéraire avec virages (Rb2).

3. Procédé de déplacement autonome selon la revendication 2, comprenant en outre :
la définition du point virtuel (Ps) à la position prédéterminée éloignée d'une carrosserie de véhicule du véhicule de travail (1) d'une distance de freinage du véhicule de travail (1) dans la direction d'avancement.

4. Procédé de déplacement autonome selon la revendication 1, comprenant en outre :
l'acceptation d'une opération de changement de la vitesse de véhicule du véhicule de travail (1) pendant le déplacement autonome à partir d'une vitesse définie prédéterminée ;
l'autorisation, sur le premier itinéraire avec virages (Rb2), de l'opération de changement de la vitesse de véhicule du véhicule de travail (1) dans une plage de la vitesse prédéterminée qui est inférieure à la vitesse définie ; et
l'autorisation, sur le deuxième itinéraire avec virages (Rb1), de l'opération de changement de la vitesse de véhicule du véhicule de travail (1) dans une plage de la vitesse définie.

5. Procédé de déplacement autonome selon la revendication 1, comprenant en outre
la définition de la vitesse de véhicule du véhicule de travail (1) sur un itinéraire d'avancement en ligne droite (Ra1, Ra2, Ra3) à la vitesse de véhicule du véhicule de travail (1) sur le premier itinéraire avec virages (Rb2) lorsque l'itinéraire d'avancement en ligne droite (Ra1, Ra2, Ra3) suivant le premier itinéraire avec virages (Rb2) est un itinéraire le long du bord de la zone de travail.

6. Procédé de déplacement autonome selon la revendication 1, comprenant en outre
la définition de la vitesse de véhicule du véhicule de travail (1) sur un itinéraire d'avancement en ligne droite (Ra1, Ra2, Ra3) à une vitesse supérieure à la vitesse prédéterminée lorsque l'itinéraire d'avancement en ligne droite (Ra1, Ra2, Ra3) suivant le premier itinéraire avec virages (Rb2) se trouve le long du bord de la zone de travail et une longueur de l'itinéraire d'avancement en ligne droite (Rb2) est plus longue qu'une longueur prédéterminée.

7. Procédé de déplacement autonome selon la revendication 6, comprenant en outre
la définition de la vitesse de véhicule du véhicule de travail (1) sur l'itinéraire d'avancement en ligne droite (Ra1, Ra2, Ra3) à une vitesse correspondant à la longueur de l'itinéraire d'avancement en ligne droite (Ra1, Ra2, Ra3) lorsque la longueur de l'itinéraire d'avancement en ligne droite (Ra1, Ra2, Ra3) est plus longue qu'une longueur prédéterminée.

8. Procédé de déplacement autonome selon la revendication 1, comprenant en outre :
le fait d'amener le véhicule de travail (1) à se déplacer à une première vitesse de véhicule qui n'est pas plus rapide que la vitesse prédéterminée lorsque, dans le premier itinéraire avec virages (Rb2), la distance depuis une position actuelle du véhicule de travail (1) jusqu'au bord de la zone de travail dépasse une valeur seuil ; ou
le fait d'amener le véhicule de travail (1) à se déplacer à une deuxième vitesse de véhicule qui n'est pas plus rapide que la première vitesse de véhicule lorsque, dans le premier itinéraire avec virages (Rb2), la distance depuis la position actuelle du véhicule de travail (1) jusqu'au bord de la zone de travail n'est pas supérieure à la valeur seuil.

9. Procédé de déplacement autonome selon l'une quelconque des revendications 1 à 8, dans lequel le point de référence est l'un d'un point central de virage (C1, C2) de l'itinéraire avec virages (Rb1, Rb2), d'un point de départ de l'itinéraire avec virages (Rb1, Rb2) ou d'un point final de l'itinéraire avec virages (Rb1, Rb2).

10. Système de déplacement autonome comprenant :
un processeur de déplacement (111) pour amener un véhicule de travail (1) à effectuer un déplacement autonome suivant un itinéraire cible incluant un itinéraire avec virages (Rb1, Rb2) dans une zone de travail ;
un processeur d'acquisition (113) pour acquérir une distance depuis un point de référence de l'itinéraire avec virages (Rb1, Rb2) jusqu'à un bord de la zone de travail ; et
un processeur de définition (112) pour définir une vitesse de véhicule du véhicule de travail (1) sur un premier itinéraire avec virages (Rb2), où la distance depuis le point de référence jusqu'au bord de la zone de travail n'est pas supérieure à une distance prédéterminée, à une vitesse prédéterminée qui est plus lente qu'une vitesse de véhicule du véhicule de travail (1) sur un deuxième itinéraire avec virages où la distance depuis le point de référence jusqu'au bord de la zone de travail dépasse la distance prédéterminée.

11. Produit de programme de déplacement autonome pour amener un ou plusieurs processeurs à exécuter les procédures comprenant :
le fait d'amener un véhicule de travail (1) à effectuer un déplacement autonome suivant un itinéraire cible incluant un itinéraire avec virages (Rb1, Rb2) dans une zone de travail ;
l'acquisition d'une distance depuis un point de référence de l'itinéraire avec virages (Rb1, Rb2) jusqu'à un bord de la zone de travail ; et
la définition d'une vitesse de véhicule du véhicule de travail (1) sur un premier itinéraire avec virages (Rb2), où la distance depuis le point de référence jusqu'au bord de la zone de travail n'est pas supérieure à une distance prédéterminée, à une vitesse prédéterminée qui est plus lente qu'une vitesse de véhicule du véhicule de travail (1) sur un deuxième itinéraire avec virages (Rb1) où la distance depuis le point de référence jusqu'au bord de la zone de travail dépasse la distance prédéterminée.
